(19) Europäisches Patentamt
European Patent Office
Office européen des brevets

(11) Veröffentlichungsnummer: **0 240 459 A1**

(12) # EUROPÄISCHE PATENTANMELDUNG

(21) Anmeldenummer: **87810160.9**

(22) Anmeldetag: **20.03.87**

(51) Int. Cl.[4]: **C 08 G 59/56**
C 08 G 59/68

(30) Priorität: **26.03.86 GB 8607565**

(43) Veröffentlichungstag der Anmeldung:
**07.10.87 Patentblatt 87/41**

(84) Benannte Vertragsstaaten:
**AT CH DE ES FR GB IT LI NL SE**

(71) Anmelder: **CIBA-GEIGY AG**
**Klybeckstrasse 141**
**CH-4002 Basel (CH)**

(72) Erfinder: **Andrews, Christopher Michael**
**192, Vinery Road**
**Cambridge CB1 3DS (GB)**

**Bagga, Madan Mohan, Dr.**
**56, Hurrell Road**
**Cambridge CB4 3RH (GB)**

**Bull, Christopher, Hubert, Dr.**
**135 Shelford Road**
**Trumpington Cambridge CB2 2ND (GB)**

(54) **Härtbare Stoffgemische.**

(57) Stoffgemische, welche als Klebstoffe, Dichtungsmittel, Laminierharze und Ueberzüge verwendet werden können, enthalten

(a) ein Epoxidharz,

(b) einen stickstoffenthaltenden latenten Härter für das Harz, wie z.B. Dicyandiamid oder Isophthalsäuredihydrazid, und

(c) als Härtungsbeschleuniger und in Pulverform in (a) und (b) verteilt, ein Umsetzungsprodukt einer Stickstoffbase und eines halogensubstituierten monomeren Phenols.

Typische für die Herstellung von (c) verwendete Stickstoffbasen sind z.B. N,N-Dimethyl-1,3-propandiamin, 2,4,6,-Tris(dimethylaminomethyl)phenol und 2-Methylimidazol. Typische halogensubstituierte Phenole sind z.B. 2,4,6-Trichlorphenol, 2,4,6-Tribromphenol, Tetrachlorbisphenol A und Tetrabrombisphenol A.

EP 0 240 459 A1

**Beschreibung**

Härtbare Stoffgemische

Die Erfindung betrifft neue härtbare Stoffgemische und deren Anwendung als Klebstoffe, Dichtungsmassen, Laminierharze und Ueberzüge.

Epoxidharze werden seit einigen Jahrzehnten als handelsübliche Klebstoffe und Ueberzüge verwendet. Viele der dabei eingesetzten Härter reagieren bereits bei Raumtemperatur und müssen daher unmittelbar vor der Verwendung mit dem Epoxidharz vermischt werden. Andere sind bei Raumtemperatur im Gemisch mit Epoxidharzen stabil und wirken erst nach Erhitzen über eine bestimmte "Schwellentemperatur" als Härter. Solche sogenannte "latente Härter" sind im Handel erhältlich und umfassen verschiedene chemische Typen von Verbindungen, wie z.B. Polycarbonsäurehydrazide, Aminotriazine, Bortrifluoridkomplexe, Bortrichlorid-Tertiäraminkomplexe, Polyphenole, Polycarbonsäuren, Dicyandiamid, Imidazole und organische Metallverbindungen.

Stoffgemische, welche ein Epoxidharz und einen latenten Härter enthalten, härten im allgemeinen zwischen 15 Minuten und 1 Stunde bei Temperaturen von ca. 180°C. Die Härtungszeiten können durch Einverleibung von latenten Beschleunigern, welche die Lagerfähigkeit kaum beeinflussen aber eine Härtung des Gemisches innerhalb von ca. 30 Minuten bis 120°C ermöglichen, verkürzt werden. Zum Beispiel bei Verwendung von Dicyandiamid als Härter wird oft ein substituierter Phenylharnstoff, wie z.B. N-(4-Chlorphenyl)-N',N'-dimethylharnstoff als Beschleuniger eingesetzt.

Eine schnellere Härtung des Gemisches wird bei Erhitzen auf höhere Temperaturen erreicht, aber bei Temperatur von ca. 200°C werden bei diesem Beschleunigertyp flüchtige Substanzen freigesetzt, welche Blasenbildung im härtenden Gemisch verursachen. Die Anwesenheit solcher Blasen in einem Klebstoff ist offensichtlich ein gravierender Nachteil, weil die so entstandene Klebverbindung viel schwächer ist als eine Verbindung ohne Blasen. Blasenhaltige Gemische können aus ähnlichen Gründen nicht zur Herstellung von zufriedenstellenden Ueberzügen oder Laminaten verwendet werden. Deshalb werden solche Gemische üblicherweise bei Temperaturen unter ca. 150°C gehärtet, wobei das Gemisch innerhalb etwa 5 Minuten verfestigt wird.

In bestimmten Bereichen der Automobilindustrie besteht der Wunsch das Punktschweissen bestimmter Komponenten durch Klebverbindungen zu ersetzen. Um mit dem Schweissverfahren konkurrenzfähig zu sein, muss ein Klebstoff innerhalb einiger Sekunden bei hohen Temperaturen härten und dabei ein gehärtetes Produkt mit hoher Festigkeit der Klebverbindung ergeben. Nur durch schnelles Erhitzen der zu verbindenden Teile kann die Geschwindigkeit des Produktionsbandes erhalten bleiben. Induktionserhitzen ist eine sehr schnelle Heizmethode, mit welcher innerhalb einiger Sekunden hohe Temperaturen erreicht werden. Bei dieser Heizmethode ist es wegen der Geometrie der Komponenten jedoch schwierig, die Temperatur genau zu kontrollieren. Aus diesem Grund sind dabei Beschleuniger, welche bei hoher Temperatur eine Blasenbildung verursachen, ungeeignet.

Epoxidharze ergeben sehr starke Klebverbindungen und wären an sich für das Verkleben von Automobilteilen geeignet. Konventionelle Formulierungen weisen jedoch einen oder mehrere der folgenden Nachteile auf: ungenügende Lagerstabilität bei Raumtemperatur, ungenügende Härtungsgeschwindigkeit beim Erhitzen oder Bildung von Blasen bei hohen Härtungstemperaturen. Es wurde nun gefunden, dass diese Nachteile überwunden werden können und eine lagerstabile Epoxidharzformulierung, welche sehr schnell bei Temperaturen von 180°-200°C ohne Blasenbildung härtet, erhalten werden kann, wenn ein Gemisch enthaltend ein Epoxidharz, einen Stickstoffhaltigen latenten Härter, insbesondere einen Härter mit Amino-, Imino-, Amido-, Imido-, Triazin- und Hydrazidgruppen und ein Umsetzungsprodukt einer basischen Stickstoffverbindung und eines halogensubstituierten Phenols verwendet wird.

Die Verwendung von Phenol-Aminsalzen als latente Härter ist z.B. aus den US Patentschriften 3,519,576 und 3,520,905 bekannt. In diesen Patenten werden krystalline Polyphenatsalze eines Polyamins und eines mehrwertigen Phenols beschrieben. Geeignete Polyamine können jede Kombination von primären, sekundären oder tertiären aliphatischen oder aromatischen Aminogruppen enthalten. Bevorzugt werden Polyamine, die alleine eine schnelle Härtung der Epoxidharze bei Raumtemperatur verursachen, wie z.B. 1,3-Propandiamin, Ethylendiamin und Triethylentetramin. Als mehrwertige Phenole werden Resorcin, Bisphenol A, 4,4'-Dihydroxybiphenyl und Tetrachlorbisphenol A erwähnt.

In der US Patentschrift 4,499,246 wird die Verwendung von halogensubstituierten Bisphenaten katalytisch aktiver tertiärer Amine als Beschleuniger bei der Härtung von Epoxidharzformpulvern, welche einen Phenolnovolak oder einen Kresolnovolak als Härter enthalten, vorgeschlagen.

Gegenstand der vorliegenden Erfindung sind härtbare Stoffgemische enthalten

(a) ein Epoxidharz

(b) einen in stickstoffhaltigen latenten Härter für das Epoxidharz und

(c) als Härtungsbeschleuniger, als Pulver im Gemisch von (a) und (b) verteilt, ein Reaktionsprodukt einer Stickstoffbase und eines halogensubstituierten monomeren Phenols.

In den neuen Stoffgemischen werden vorzugsweise solche Epoxidharze (a) verwendet, die mindestens zwei Glycidyl- oder Beta-methylglycidylgruppen direkt an einem oder mehreren Sauerstoff-, Stickstoff- oder Schwefelatomen gebunden haben.

Beispiele solcher Harze sind Polyglycidyl- und Poly(beta-methylglycidyl)ester, welche durch Umsetzung

einer Verbindung mit zwei oder mehr Carboxylgruppen pro Molekül mit Epichlorhydrin, Glycerindichlorhydrin oder Beta-methylepichlorhydrin in Anwesenheit von Basen erhalten werden. Solche Polyglycidylester können von aliphatischen Carbonsäuren, wie z.B. Oxalsäure, Bernsteinsäure, Glutarsäure, Adipinsäure, Pimelinsäure, Suberinsäure, Azelainsäure, Sebacinsäure oder dimerisierter oder trimerisierter Linolensäure; von cycloaliphatischen Polycarbonsäuren, wie z.B. Tetrahydrophthalsäure, 4-Methyltetrahydrophthalsäure, Hexahydrophthalsäure und 4-Methylhexahydrophthalsäure und von aromatischen Polycarbonsäuren, wie z.B. Phthalsäure, Isophthalsäure und Terephthalsäure, abgeleitet werden.

Weitere Beispiele von Epoxidharzen sind Polyglycidyl- und Poly(betamethylglycidyl)ether, welche durch Umsetzung einer Verbindung mit mindestens zwei freien alkoholischen und/oder phenolischen Hydroxylgruppen pro Molekül mit dem geeigneten Epichlorhydrin unter basischen Bedingungen, oder in Gegenwart eines sauren Katalysators gefolgt von Behandlung mit Base, erhalten werden. Solche Ether können aus acyclischen Alkoholen, wie z.B. Ethylenglykol, Diethylenglykol und höheren Poly(oxyethylen)glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrine; von cycloaliphatischen Alkoholen, wie z.B. Resorcit, Chinit, Bis(4-hydroxycyclohexyl)methan, 2,2-Bis(4-hydroxycyclohexyl)propan und 1,1-Bis(hydroxymethyl)cyclohex-3-en; und von aromatische Kerne enthaltenden Alkoholen, wie z.B. N,N-Bis(2-hydroxyethyl)anilin und p,p'-Bis(2-hydroxyethylamino)diphenylmethan abgeleitet werden. Sie können auch von einkernigen Phenolen, wie z.B. Resorcin und Hydrochinon, von mehrkernigen Phenolen, wie z.B. Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan sowie von Novolaken, erhalten aus Aldehyden, wie Formaldehyd, Acetaldehyd, Chloral und Furfuraldehyd, und Phenolen wie Phenol selber und im Ring durch Chloratome oder bis zu neuen Kohlenstoffatomen enthaltenden Alkylgruppen, wie z.B. 4-Chlorphenol, 2-Methylphenol, und 4-tert.Butylphenol, abgeleitet werden.

Poly(N-glycidyl)verbindungen umfassen z.B. solche, die durch Dehydrochlorierung des Reaktionsprodukts von Epichlorhydrin mit mindestens zwei Aminwasserstoffatome enthaltenden Aminen, wie z.B. Anilin, n-Butylamin, Bis(4-aminophenyl)methan, m-Xylylendiamin und Bis(4-methylaminophenyl)methan; Triglycidylisocyanurat; N,N'-Diglycidylderivate von cyclischen Alkylenharnstoffen, wie z.B. Ethylenharnstoff und 1,3-Propylenharnstoff, und von Hydantoinen, wie z.B. 5,5-Dimethylhydantoin.

Beispiele von Poly(S-glycidyl)verbindungen sind Di-S-glycidylderivate von Dithiolen, wie z.B. von Ethan-1,2-dithiol und Bis(4-mercaptomethylphenyl)ether.

Es können auch Epoxidharze, welche die 1,2-Epoxidgruppen an verschiedene Heteroatome gebunden haben, verwendet werden, wie z.B. das N,N,O-Triglycidylderivat von 4-Aminophenol, der Glycidylether-Glycidylester der Salicylsäure, N-Glycidyl-N'-(2-glycidyloxypropyl)5,5-dimethylhydantoin und 2-Glycidyloxy-1,3-bis(5,5-dimethyl-1-glycidylhydantoin-3-yl)propan.

Falls gewünscht, kann auch ein Gemisch von Epoxidharzen verwendet werden.

Bevorzugt werden flüssige Epoxidharze, welche Polyglycidylether, Polyglycidylester, N,N'-Diglycidylhydantoine, und Poly(N-glycidyl)derivate von aromatischen Aminen umfassen. Spezifische bevorzugte Harze sind Polyglycidylether von 2,2-Bis(4-Hydroxyphenyl)propan, von Bis(4-Hydroxyphenyl)methan oder von einem aus Formaldehyd und Phenol oder mit einem Chloratom oder einer bis zu neun C-Atome enthaltender Alkylgruppe substituierten Phenol erhaltenen Novolak mit einem Epoxidgehalt von mindestens 0,5 Aequivalenten pro Kilogramm, Bis(4-(diglycidylamino)phanyl)methan und p-(Diglycidylamino)phenyl-glycidylether.

Der in den vorliegenden Stoffgemischen verwendete stickstoffenthaltende latente Härter (b) kann jede Verbindung sein, welche gegenüber dem Epoxidharz unterhalb einer bestimmten Schwelltemperatur, die im allgemeinen mindestens 80°C, vorzugsweise mindestens 100°C oder mehr beträgt, inert bleibt, aber über der Schwelltemperatur eine schnelle Härtung bewirkt.

Solche Substanzen sind bekannt und im Handel erhältlich. Bevorzugt werden Härter, die Amino-, Imino-, Amido-, Imido-, Triazin- oder Hydrazidgruppen enthalten.

Geeignete Härter sind z.B. Bortrichlorid/Amin- und Bortrifluorid/Amin-Komplexe, Dicyandiamid, Aminotriazine mit Melaminen, wie z.B. Melamin selber oder Diallylmelamin, und Guanamine, wie z.B. Acetoguanamin oder Benzoguanamin, Aminotriazole, wie z.B. 3-Amino-1,2,4-triazol, Carbonsäurehydrazide, wie Adipindihydrazid, Stearinhydrazid und Isophthaldihydrazid, Semicarbazid, Cyanoacetamid und aromatische Polyamine wie Diaminodiphenylsulfon. Besonders bevorzugt werden Dicyandiamid, Isophthalsäuredihydrazid, Adipinsäuredihydrazid und 4,4'-Diaminodiphenylsulfon.

Das für die Herstellung des Beschleunigers (c) verwendete halogensubstituierte Phenol ist ein monomeres Phenol, d.h. eine Verbindung, die im wesentlichen frei von harzartigen phenolischen Stoffen ist, wie z.B. Stoffen erhalten durch Kondensationspolymerisation eines Phenols und eines Aldehyds, oder durch Polymerisation eines ethylenisch ungesättigten Phenols. Das halogensubstituierte monomere Phenol weist im allgemeinen 1 bis 4 aromatische Kerne auf. Bevor zugt werden einkernige oder zweikernige Phenole. Das Phenol hat im allgemeinen 1 bis 4, vorzugsweise 1 oder 2, phenolische Hydroxylgruppen. Im allgemeinen weist das Phenol mindestens 2 halogenatome pro phenolischen, Hydroxylgruppen enthaltenden aromatischen Ring. Bevorzugt werden Phenole mit mindestens insgesasmt 3 Halogenatomen. Das Halogen kann Fluor, Chlor, Brom oder Iod sein.

Geeignete halogensubstituierte Phenole sind z.B. einkernige und zweikernige Phenole mit 3 bis 8, vorzugsweise 3 bis 5, Fluor, Chlor, Brom oder Iodatomen, welche an aromatische Kohlenstoffatome gebunden

sind. Beispiele solcher Phenole sind fluorsubstituierte einkernige Phenole, wie z.B. 2,4,6-Trifluorphenol, 2,3,5,6-Tetrafluorphenol und Pentafluorphenol. Chlor-, brom- und iodsubstituierte einkernige Phenole umfassen einwertige Phenole wie z.B. 2,3,4-Trichlorphenol, 2,3,5-Trichlorphenol, 2,3,6-Trichlorphenol, 2,4,5-Trichlorphenol, 2,4,6-Trichlorphenol, 3,4,5-Trichlorphenol, 2,4,6-Tribromphenol, 2,3,5-Triiodphenol, 2,4,6-Triiodphenol, 2,3,4,5-Tetrachlorphenol, 2,3,5,6-Tetrachlorphenol, Pentachlorphenol, Pentabromphenol, 4,5,6-Trichlor-2-methylphenol, 3,5,6-Trichlor-2-methylphenol, 2,4,6-Trichlor-3-methylphenol und 2,3,6-Trichlor-4-methylphenol, sowie zweiwertige Phenole, wie z.B. 2,4,6-Tribrom-1,3-dihydroxybenzol, 2,4,6-Triiod-1,3-dihydroxybenol, Tetrabromhydrochinon und Tetrabromcatechol; chlor- und bromsubstituierte zweikernige Phenol und Naphthole, wie z.B. 1,3,6-Tribrom-2-naphthol und Bisphenole der Formel I

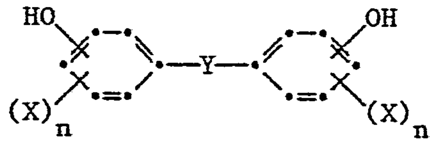

(I),

worin X Chlor oder Brom, Y eine direkte Bindung, eine $C_1$-$C_4$-Alkylengruppe, vorzugsweise Methylen oder Isopropyliden, Sauerstoff oder Schwefel oder eine CO oder $SO_2$-Gruppe, und n 2, 3 oder 4 bedeuten.

Vorzugsweise bedeuten in der Formel I n 2, und X Chlor oder Brom in ortho Stellung zur phenolischen Hydroxylgruppe.

Beispiele von Bisphenolen der Formel I sind Bis(3,5-dichlor-4-hydroxyphenyl)methan, Bis(3,5-Dibrom-4-hydroxyphenyl)methan, 2,2-Bis(3,5-dichlor-4-hydroxyphenyl)propan (Tetrachlorbisphenol A), 2,2-Bis(3,5-dibrom-4-hydroxyphenyl)propan (Tetrabrombisphenol A), 3,5,3′,5′-Tetrachlor-4-4′-dihydroxybiphenyl, 3,5,3′,5′-Tetrabrom-4,4′-dihydroxybiphenyl, 4,4′-Dihydroxyoctachlorbiphenyl, Bis(3,5-dibrom-4-hydroxyphenyl)sulfon, 3,5,3′,5′-Tetrachlor-4,4′-dihydroxybenzophenon und 3,5,3′,5′-Tetrabrom-4,4′-dihydroxybenzophenon.

Besonders bevorzugte halogensubstituierte Phenole sind einkernige Phenole mit 3 bis 5 Fluor-, Brom- oder Iodatomen, und Bisphenole mit 4 Chlor- oder Bromatomen, wobei die Halogenatome direkt an aromatische Kohlenstoffatome gebunden sind. Am meisten bevorzugte Phenole sind 2,4,6-Trichlorphenol, 2,4,5-Tribromphenol, 2,4,6-Triiodphenol, Pentafluorphenol, Tetrachlorbisphenol A und Tetrabrombisphenol A.

Die für die Herstellung des Beschleunigers (c) verwendete Stickstoffbase kann ein Amin oder ein basischer stickstoffenthaltender Heterocyclus sein. Im allgemeinen hat die Base einen Siedepunkt von mindestens 50° C, vorzugsweise von mindestens 80° C. Beispiele von Aminen, welche mit halogensubstituierten Phenolen umgesetzt werden können, sind primäre Amine, im allgemeinen primäre Diamine, wie z.B. Isophorondiamin (5-Aminoethyl-3,5,5-trimethylcyclohexylamin), 1,3-Diaminopropan, 1,3-Diaminobutan, 1,4-Diaminobutan und Hexamethylendiamin; sekundäre Amine, wie z.B. die Monoamine 2-(Methylamino)ethanol, Di-isobutylamin, Di-n-amylamin und Di-isoamylamin sowie Diamine, wie z.B. Piperazin und N,N′-Diethylethylendiamin; gemischte primär-sekundäre Polyamine, wie z.B. Diethylentriamin, Triethylentetramin und Tetraethylenpentamin.

Bevorzugt werden zur Herstellung des Beschleunigers (c) solche Amine verwendet, welche mindestens eine tertiäre Aminogruppe enthalten. Das können Monoamine oder Polyamine mit 2 bis 4 Aminogruppen, von denen mindestens eine tertiär ist, vorzugsweise Monoamine oder Polyamine mit 1 bis 3 tertiären Aminogruppen, sein. Bevorzugte Amine sind z.B. tertiäre Monoamine, wie Triethylamin, Tri-n-propylamin, Tri-n-Butylamin, Tri-isobutylamin, Trihexylamin, Octyldimethylamin, Benzyldimethylamin, N,N-diethylcyclohexylamin, 2-(Dimethylaminoethanol, 2-(Diethylamino)ethanol, 3-(Dimethylamino)-1-propanol und 2-(Dimethylaminomethyl)phenol; tertiäre Diamine wie N,N,N′,N′-Tetramethylethylendiamin, N,N,N′,N′-Tetramethyl-1-4-butandiamin, 1,7-Bis(dimethylamino)heptan, und Bis(4-Dimethylaminophenyl)-methan; tertiäre Triamine, wie z.B. 2,4,6-Tris(dimethylaminomethyl)-phenol und Bis(dimethylaminoethyl)methylamin, gemischte Polyamine, wie 3-(Dimethylamino)propylamin (N,N,-Dimethyl-1,3-propandiamin), N,N-Diethyl-1,3-propandiamin, N,N-Dimethylethylendiamin und N-(2-Aminoethyl)piperazin.

Beispiele stickstoffhaltiger Heterocyclen, die mit den halogensubstituierten Phenolen umgesetzt werden können, sind Pyrazole, Imidazole, Pyrrole, Pyridine, Pyrazine, Indole und Piperidine. Bevorzugt werden Heterocyclen mit mindestens einem tertiären Stickstoffatom im Ring, wie N-substituierte Pyrrole, z.B. N-Methylpyrrol, N-substituierte Pyridine, z.B. N-Methyl-, N-Ethyl- und N-Benzylpyridine, N-substituierte Pyrazine, z.B. N,N′-Dimethyl- und N,N′-Diethylpyrazine, N-substituierte Indole, z.B. N-Methyl- und N-Ethylindole, N-substituierte Piperidine, z.B. N-Methyl-, N-Ethyl-und N-Isopropylpiperidine und, vorzugsweise Imidazole, wie z.B. Imidazol, N-substituierte Imidazole, z.B. 1-Methylimidazol und 1-(2′,4′-Diamino-s-triazin-6′-ylethyl)-2-methylimidazol (6-[2-(2-Methyl-1H-imidazol-1-yl)ethyl]-1,3,3-triazin-2,4-diamin), C-substituierte Imidazole, wie z.B. 2-Methylimidazol, 2-Ethylimidazol, 2-n-Propylimidazol, 4-Methylimidazol, 2-Methyl-4-phenylimidazol, 2-Phenylimidazol, 2-Ethyl-4-methylimidazol und Benzimidazol.

Besonders bevorzugte Basen sind N,N-Dimethyl-1,3-propandiamin, 2,4,6-Tris(dimethylaminomethyl)phenol, N,N,N′,N′-Tetramethylethylendiamin, Triethylamin, Benzyldimethylamin, 2-Methylimidazol und 2-Ethyl-4-methylimidazol.

Besonders bevorzugte Beschleuniger (c) sind Reaktionsprodukte der besonders bevorzugten Basen mit den am meisten bevorzugten Phenolen.

Die Beschleuniger können auf einfache Weise durch Erhitzen des substituierten Phenols und der

Stickstoffbase bis eine klare Flüssigkeit erhalten wird, gefolgt von Abkühlen, um ein festes Produkt zu erhalten, hergestellt werden. Bevorzugt wird eine andere Herstellungsmöglichkeit, wobei das Phenol in einem Alkohol, meistens in Methanol Ethanol oder Isopropanol, oder in einem Kohlenwasserstoff, wie z.B. Toluol, bei Raumtemperatur oder bei leicht erhöhter Temperatur gelöst wird, und die Stickstoffbase langsam zur erhaltenen Lösung zugegeben wird. Während der Zugabe wird ein Niederschlag des gewünschten Produkts gebildet. Der Niederschlag wird abfiltriert, gewaschen und getrocknet. Unabhängig davon nach welcher Methode der Beschleuniger hergestellt wurde, wird das getrockenete Produkt vor der erfindungsgemässen Verwendung in pulverförmigen Zustand gebracht.

Es wird vermutet, dass das feste Reaktionsprodukt des Pheonls und der Base allgemein in Salzform ist. Bei einwertigen Phenolen ist das Produkt im allgemeinen ein Umsetzungsprodukt von 1 Aminäquivaltent der Base mit einem phenolischen Hydroxyläquivalent des Phenols. Bei mehrwertigen Phenolen können eine, mehrere oder alle phenolische Hydroxylgruppen an der Reaktion teilnehmen. Bei Bisphenolen z.B. können Produkte durch Umsetzung einer oder beider Hydroxylgruppen erhalten werden, wobei um das Umsetzungsprodukt einer Hydroxylgruppe zu erhalten, die Hälfte der Base benötigt wird als für das Umsetzungsprodukt beider Hydroxylgruppen. Auf diese Art können die entsprechenden Mengen des Phenols und der Base gewählt werden. Bei der Herstellung des Produktes durch die oben beschriebene Ausfällung, kann bei Verwendung von mehr als der stöchiometrischen Menge des Amins das überschüssige Amin bei der Filtrierung entfernt werden.

Die Menge des in den erfindungsgemässen Gemischen verwendeten latenten Härters (b) ist nicht kritisch. Es können die üblichen für einen bestimmten Härter und ein bestimmtes Epoxidharz verwendeten Mengen eingesetzt werden. Diese Mengen sind dem Fachmann auf dem Gebiet der Epoxidharzformulierungen wohl bekannt. Im allgemeinen liegt die Menge des Härter im Bereich von 1 bis 30 Gewichtsteilen, insbesondere von 5 bis 30 Gewichtsteilen pro 100 Gewichtsteile des Epoxidharzes (a).

Auch die in den vorliegenden Stoffgemischen verwendete Menge des Beschleunigers (c) ist nicht kritisch, unter der Bedingung, dass sie ausreicht, um den beschleunigenden Effekt zu erzielen. Im allgemeinen liegen die Mengen im Bereich von 0,1 bis 15, insbesondere von 0,5 bis 10 Gew.%, des Epoxidharzes (a).

Die beschriebenen härtberen Gemische können als Ueberzüge, Dichtungsmassen, Laminierharze und insbesondere als Klebstoffe eingesetzt werden. Gegenstand der Erfindung ist somit auch ein Verfahren zum Verkleben oder Abdichten von zwei Oberflächen, insbesondere von Metalloberflächen, indem die erfindungsgemässen Gemische auf eine oder beide Oberflächen aufgetragen werden, die zwei Oberflächen zusammengelegt werden, wobei das Stoffgemisch dazwischen liegt, um eine zusammengefügte Einheit zu erhalten, und diese dann bis zur Aushärtung des Gemisches zu erhitzen. Selbstverständlich wird im Falle eines festen Stoffgemisches dieses beim Erhitzen zuerst schmelzen, bevor es durch die Härtung verfestigt wird. Bevorzugt werden Härtungstemperaturen von 150 bis 200°C, insbesondere 175 bis 200°C, so dass die Härtung innerhalb von 5 Sekunden bis 15 Minuten, insbesondere von 10 Sekunden bis 10 Minuten, erfolgt. Das Verfahren kann zum Zusammenkleben von Metalloberflächen, wie z.B. von Stahl oder Aluminium, von Kunststoffen, Glas, reibungsvermittelnden Material, wie z.B. Bremsbelege, sowie keramischen Material eingesetzt werden.

Den erfindungsgemässen Stoffgemischen können zur Verbesserung von physikalischen oder chemische Eigenschaften der Gemische im ungehärteten oder gehärteten Zustand, Additive zugegeben werden, wie z.B. Pigmente, Farbstoffe, Flexibilisatoren, Plastifizierungsmittel, Füllstoffe, Thixotropiemittel und Flammschutzmittel.

Bei den Mengenangaben der in den folgenden Beispielen verwendeten Stoffen handelt es sich bei allen Teilen um Gewsichtsteile. Die verwendeten Beschleuniger werden wie folgt hergestellt:

Beschleuniger I

2,4,6-Tribromphenol (9,93 g, 0,03 Mol) und 2,4,6-Tris(dimethylaminomethyl)phenol (3,98 g, 0,015 Mol) werden gemischt und auf 50°C erhitzt, wobei eine exotherme Reaktion einsetzt. Nach Abklingen der exothermen Reaktion wird die Reaktionsschemlze auf 140°C erhitzt und bei dieser Temperatur 1/2 Stunde gehalten. Die so erhaltene dunkelviolette Schmelze wird in eine Aluminiumschale gegossen, in der sie schnell fest wird und einen brüchigen Feststoff bildet. Dieser wird zu einem Pulver zermahlen.

Beschleuniger II

2,4,6-Tribromphenol (16,55 g, 0,05 Mol) weden in 250 ml Isopropanol bei 50°C gelöst, und N,N-Dimethyl-1,3-propandiamin (2,55 g, 0,025 Mol) werden bei dieser Temperatur unter Rühren zugetropft. Der ausgefallene Feststoff wird durch Erhitzen des Reaktionsgemisches unter Rückfluss gelöst. Nach Abkühlen der Lösung fällt eine weisser Feststoff aus. Dieser wird in Isopropanol gewaschen und in einem Vakuumofen bei 60°C getrocknet, wobei 16 g eines Produkts mit einem Schmelzpunkt von 165-166°C und einem Amingehalt von 2,55 Aequivalenten/kg erhalten werden. Das Produkt wird zu einem Pulver zermahlen.

Beschleuniger III

Tetrachlorbisphenol A (18,3 g, 0,05 Mol) wird in 25 ml Methanol bei Raumtemperatur gelöst. Dieser Lösung wird N,N-dimethyl-1,3-propandiamin (5,1 g, 0,05 Mol) unter Rühren zugetropft. Ein weisser Feststoff fällt dabei aus. Das Reaktionsgemisch wird noch eine weiteere 1/2 Stunde gerührt und dann auf Eis gekühlt. Der weisse Fesstoff wird abfiltriert, mit eiskaltem Methanol gewaschen und getrocknet. Es werden 22 g eines Produkts

mit einem Schmelzpunkt von 196-199°C und einem Amingehalt von 4,17 Aequivalenten/kg erhalten. Das Produkt wird zu einem Pulver vermahlen.

Beschleuniger IV

Tetrabrombisphenol A (27,2 g, 0,05 Mol) wird in 80 ml Methanol bei Raumtemperatur gelöst, und der so erhaltenen Lösung wird portionenweise unter Rühren 2-Ethyl-4-methylimidazol (11 g, 0,1 Mol) beigegeben. Während der Zugabe fällt ein weisser Feststoff aus. Das Reaktionsgemisch wird während noch einer Stunde gerührt, und der weise Feststoff wird abfiltriert, mit Methanol gewaschen und dann getrocknet. Es erden 32 g eines Produkts mit einem Schmelzpunkt von 157-158°C und einem Amingehalt von 3,02 Aequivalenten/kg erhalten. Das Produkt wird zu einem Pulver zermahlen.

Beschleuniger V

Tetrabrombisphenol A (27,2 g, 0,05 Mol) wird in 50 ml Methanol gelöst und mit 2-Methylimidazol (8,2 g, 0,1 Mol) nach dem bei der Herstellung von Beschleuniger IV beschrieibenen Verfahren umgesetzt, um 31 g eines weissen Feststoffes mit einem Schmelzpunkt von 174°-176°C und einem Amingehalt von 3,1 Aequivalenten/kg zu ergeben. Das Produkt wird zu einem Pulver zermahlen.

Beschleuniger VI

Tetrabrombisphenol A (27,2 g, 0,05 Mol) wird in 100 ml Methanol bei Raumtemperatur gelöst und dieser Lösung wird unter Rühren N,N-Dimethyl-1,3-propandiamin (5,1 g, 0,05 Mol) zugetropft. Dabei entsteht ein weisser Niederschlag. Das Reaktionsgemisch wird noch eine Stunde gerührt. Der feste Niederschlag wird abfiltriert, mit Methanol gewaschen und getrocknet. Es werden 31,7 g eines Produkts mit einem Schmelzpunkt von 182-184°C und einem Amingehalt von 2,95 Aequivalenten/kg erhalten. Das Produkt wird zu einem Pulver vermahlen.

Beschleuniger VII

Tetrabrombisphenol A (27,2 g, 0,05 Mol) wird in 100 ml Methanol bei Raumtemperatur gelöst und mit N,N,N',N'-Tetramethylethylendiamin (5,8 g, 0,05 Mol) nach dem bei der Hestellung von Beschleuniger VI beschriebenen Verfahren umgesetzt, und es wird ein weisser Feststoff mit einem Schmelzpunkt von 198-200°C und einem Amingehalt von 1,66 Aequivalenten/kg erhalten. Das Produkt wird zu einem Pulver vermahlen.

Beschleuniger VIII

Tetrachlorbisphenol A (10,98 g, 0,03 Mol) wird in 30 ml Ethanol bei 40°C gelöst und dieser Lösung wird 2,4,6-Tris(dimethylaminomethyl)phenol (7,95 g, 0,03 Mol) unter Rühren zugetropft. Das Reaktionsgemisch wird noch eine halbe Stunde bei 40°C gerührt. Dabei fällt ein weisser Feststoff aus. Das Reaktionsgemisch wird in einem Eisbad gekühlt, der weisse Feststoff wird abfiltriert, mit eiskaltem Ethanol gewaschen, und es werden 13,8 g eines Feststoffs mit einem Schmelzpunkt von 174-175°C und einem Amingehalt von 3,2 Aequivalenten/kg erhalten. Das Produkt wird zu einem Pulver vermahlen.

Beschleuniger IX

Tetrabrombisphenol A (27,2 g, 0,05 Mol) wird in 50 ml Methanol bei Raumtemperatur gelöst und dieser Lösung wird unter Rühren Triethylamin (10,12 g, 0,1 Mol) zugetropft. Das Reaktionsgemisch erhitzt sich dabei bis auf 40°C, und ein weisser Feststoff fällt aus. Das Reaktionsgemisch wird noch $^1/_2$ Stunde gerührt, das ausgefallene Produkt wird abfiltriert, mit Methanol gewaschen und getrocknet, um 24,3 g eines Feststoffes mit einem Schmelzpunkt von 191,5-193°C und einem Amingehalt von 1,55 Aequivalenten/kg zu ergeben. Der Feststoff wird zu einem Pulver zermahlen.

Beschleuniger X

Pentabromphenol (14,66 g, 0,03 Mol) wird in 60 ml Toluol bei 100°C gelöst, und der Lösung wird N,N-Dimethylpropan-1,3-diamin (1,53 g, 0,015 Mol) bei 95-100°C zugetropft. Nach dem Abkühlen des Reaktionsgemisches fällt ein Feststoff aus. Dieser wird abfiltriert, mit Toluol gewaschen und getrocknet. Es werden 14 g eines Stoffes mit einem Schmelzpunkt von 116-118°C und einem Amingehalt von 1,68 Aequivalenten/kg erhalten und zu einem Pulver vermahlen.

Beschleuniger XI

2,4,6-Triiodphenol (14,15 g, 0,03 Mol) und 50 g Methanol werden bei Raumtemperatur zu einer Suspension gerührt. 4,05 g (0,03 Mol) Benzyldimethylamin werden zugetropft, wobei das Phenol gelöst wird. Die Reaktionslösung wird 15 Minuten bei Raumtemperatur und 15 Minuten bei 50-55°C gerührt. Nach Abkühlen fällt ein Feststoff aus, der abfiltriert, mit Methanol gewaschen und getrocknet wird. Man erhält 13,2 g eines Stoffes mit einem Schmelzpunkt von 94-95,5°C und einem Amingehalt von 1,63 Aequivalenten/kg, welcher zu einem Pulver zermahlen wird.

Beschleuniger XII

2,4,6-Trichlorphenol (9,85 g, 0,05 Mol) wird in 15 ml Toluol bei 40-45°C gelöst und der Lösung wird unter Rühren N,N-Dimethylpropan-1,3-diamin (2,55 g, 0,025 Mol) zugetropft. Das Reaktionsgemisch erhitzt sich dabei auf 60°C und wird dann bei dieser Temperatur noch 10 Minuten gehalten. Nach Abkühlen fällt ein Feststoff aus, der abfiltriert, mit Toluol gewaschen und getrocknet wird, um 11 g eines Stoffes mit einem Schmelzpunkt von 130-131°C und einem Amingehalt von 3,91 Aequivalenten/kg zu ergeben. Der Stoff wird zu einem Pulver vermahlen.

Beschleuniger XIII

2,4,6-Trichlorphenol (6,0 g, 0,0127 Mol) und 2,4,6-Tris(di-methylaminomethyl)phenol (1,68 g, 0,0063 Mol) werden bei Raumtemperatur zu einer dicken Paste vermischt, welche dann unter Rühren auf 110°C erhitzt wird. Die erhaltene Schmelze wird 15 Minuten bei 110°C gehalten und dann abgekühlt, um einen spröden Feststoff zu liefern, welcher zu einem Pulver vermahlen wird.

Beschleuniger XIV

Pentafluorphenol (9,2 g, 0,05 Mol) wird bei Raumtemperatur in 20 ml Methanol gelöst. N,N-Dimethylpropan-1,3-diamin (2,55 g, 0,025 Mol) wird der Lösung zugetropft, wobei eine leicht exotherme Reaktion einsetzt und die Temperatur auf 40°C erhöht, wobei ein Feststoff ausfällt. Das Gemisch wird bei Raumtemperatur weitere 15 Minuten gerührt, abfiltriert, mit Methanol gewaschen und getrocknet. Man erhält 7 g eines Stoffes mit einem Schmelzpunkt von 183-185°C und einem Aminwert von 4,23 Aequivalenten/kg, der zu einem Pulver vermahlen wird.

Beschleuniger XV

Tetrabrombisphenol A (27,2 g, 0,05 Mol) wird bei Raumtemperatur in 50 ml Methanol gelöst und der Lösung wird unter Rühren 2,4,6-Tris(dimethylaminomethyl)phenol (13,25 g, 0,05 Mol) zugetropft. Das Gemisch wird 2 Stunden bei Raumtemperatur gerührt, wobei ein Feststoff ausfällt. Dieser wird abfiltriert, mit Methanol gewaschen und getrocknet. Man erhält 31,5 g eines Stoffes mit einem Schmelzpunkt von 107-110°C und einem Aminwert von 3,51 Aequivalenten/kg. Der Feststoff wird zu einem Pulver vermahlen.

Beispiel 1: Bisphenol A Diglycidylether mit einem Epoxidgehalt von 5,2 Aequivalenten/kg (100 Teile) wird mit Dicyandiamid (7,5 Teile), feinverteiltem Silikagel (5,0 Teile) und Beschleuniger I (5,2 Teile) vermischt. Das Gemisch ist 16 Tage bei 40°C stabil. Eine Probe des Gemisches wird auf eine Stahlheizplatte bei 180°C erhitzt, wobei eine Verfestigung innerhalb von 1,2 Minuten stattfindet. Beim Erhitzen einer 2 mm dicken Schicht des Gemisches, welchem noch 60 Teile Talk zugegeben werden, während 5 Minuten bei 200°C kommt es nicht zur Blasenbildung.

Beispiel 2: Beispiel 1 wird wiederholt, indem als Beschleuniger Beschleuniger II (3,7 Teile) verwendet wird. Die Verfestigung erfolgt innerhalb von 1,9 Minuten bei 180°C, während das Gemisch bei 40°C 33 Tage lang stabil ist. Beim Erhitzen einer 2 mm dicken Schicht des zusätzlich noch 60 Teile Talk enthaltenden Gemisches während 5 Minuten bei 200°C kommt es nicht zur Blasenbildung.

Beispiel 3: Beispiel 1 wird wiederholt, indem Beschleuniger III (8,2 Teile) verwendet wird. Die Verfestigung erfolgt erfolgt innerhalb von 0,4 Minuten bei 180°C, wobei das Gemisch bei 40°C während 64 Tagen stabil ist. Beim Erhitzen einer 2 mm dicken Schicht des zusätzlich noch 60 Teile Talk enthaltenden Gemisches während 5 Minuten bei 200°C kommt es nicht zur Blasenbildung.

Beispiel 4: Beispiel 1 wird wiederholt, indem Beschleuniger VIII (3,8 Teile) verwendet wird. Die Verfestigung erfolgt bei 180°C innerhalb von einer Minute, wobei das Gemisch bei 40° während 15 Tagen stabil ist. Beim Erhitzen einer 2 mm dicken Schicht des zusätzlich noch 60 Teile Talk enthaltenden Gemisches während 5 Minuten bei 200°C kommt es nicht zur Blasenbildung.

Beispiel 5: Das im Beispiel 1 beschriebene Epoxidharz (100 Teile) wird mit Isophthalsäuredihydrazid (25,2 Teile), feinverteiltem Silikagel (5,0 Teile) und Beschleuniger VI (3,3 Teile) vermischt. Eine Probe dieses Gemisches verfestigt sich auf einer Heizplatte bei 180°C innerhalb von 1,1 Minuten, wobei das Gemisch bei 40°C 30 Tage lang lagerfähig ist. Beim Erhitzen einer 2 mm dicken Schicht des noch zusätzlich 60 Teile Talk enthaltenden Gemisches auf 200°C während 5 Minuten, kommt es nicht zur Blasenbildung.

Beispiel 6: Beispiel 5 wird wiederholt, indem Beschleuniger VII (2,9 Teile) verwendet wird. Die Verfestigung erfolgt bei 180°C innerhalb von 1,5 Minuten, während das Gemisch bei 40°C eine Lagerstabilität von 15 Tagen hat. Beim Erhitzen einer 2 mm dicken Schicht des zusätzlich noch 60 Teile Talk enthaltenden Gemisches auf 200°C während 5 Minuten kommt es nicht zur Blasenbildung.

Beispiel 7: Beispiel 5 wird wiederholt, indem Beschleuniger V (2,9 Teile) verwendet wird. Die Verfestigung bei 180°C erfolgt innerhalb von 1,1 Minuten, wobei das Gemisch bei 40°C während 12 Tagen stabil ist. Beim Erhitzen einer 2 mm dicken Schicht des zusätzlich noch 60 Teile Talk enthaltenden Gemisches auf 200°C während 5 Minuten, kommt es nicht zur Blasenbildung.

Beispiel 8:

Das im Beispiel 1 verwendete Epoxidharz (100 Teile) wird mit Adipinsäuredihydrazid (23,1 Teile), feinverteiltem Silikagel (5,0 Teile) und Beschleuniger I (2,6 Teile) vermischt. Eine Probe dieses Gemisches verfestigt sich auf einer Heizplatte bei 180°C in einer Minute, wobei das Gemisch bei 40°C während 54 Tagen stabil ist. Beim Erhitzen einer 2 mm dicken Schicht des zusätzlich noch 60 Teile Talk enthaltenden Gemisches

auf 200°C während 5 Minuten kommt es nicht zur Blasenbildung.

Beispiel 9: Beispiel 8 wird wiederholt, indem Beschleuniger IV (7,6 Teile) verwendet wird. Die Verfestigung bei 180°C erfolgt in 0,6 Minuten, während das Gemisch bei 40°C 5 Tage lang stabil ist. Beim Erhitzen einer 2 mm dicken Schicht des zusätzlich noch 60 Teile Talk enthaltenden Gemisches auf 200°C während 5 Minuten kommt es nicht zur Blasenbildung.

Beispiel 10: Ein Stoffgemisch wird hergestellt enthaltend
100 Teile Epoxidharz
7,5 Teile Dicyandiamid
5,0 Teile feinverteiltes Silikagel
1,0 Teil Glasmikrokugeln
5,2 Teile Beschleuniger I.

Das verwendete Epoxidharz ist dasselbe wie im Beispiel 1. Die Glasmikrokugeln werden zur Kontrolle der Dicke der Klebschicht eingesetzt.

Das Gemisch wird auf entfettete kugelgestrahlte Flussstahlplatten aufgetragen und überlappte Klebfugen mit einer Ueberlappungsfläche von 645 $mm^2$ werden hergestellt. Die Härtung erfolgt 10 Minuten bei 180°C, und die Klebverbindung wird auf Raumtemperatur abkühlen gelassen. Die Ueberlappungsscherfestigkeit (Mittel aus drei Proben) beträgt 15,8 MPa.

Beispiel 11: Beispiel 10 wird unter Verwendung des Beschleunigers VIII (3,8 Teile) wiederholt. Die durchschnittliche Ueberlappungsscherfestigkeit beträgt 16,3 MPa.

Beispiel 12: Beispiel 10 wird unter Verwendung des Beschleunigers II (3,7 Teile) und Härtung bei 200°C während 5 Minuten wiederholt. Die durchschnittliche Ueberlappungsscherfestigkeit beträgt 17,1 MPa.

Beispiel 13: Beispiel 12 wird unter Verwendung des Beschleunigers III (8,2 Teile) wiederholt. Die durchschnittliche Ueberlappungsscherfestigkeit beträgt 16,1 MPa.

Beispiel 14: Beispiel 10 wird wiederholt, indem Dicyandiamid als Härter durch Isophthalsäuredihydrazid (25,2 Teile), und der Beschleuniger durch Beschleuniger VII (2,9 Teile) ersetzt wird. Die durchschnittliche Ueberlappungsscherfestigkeit beträgt 12,9 MPa.

Beispiel 15: Beispiel 14 wird unter Verwendung des Beschleunigers V (2,9 Teile) und Härtung bei 200°C während 5 Minuten wiederholt. Die durchschnittliche Ueberlappungsscherfestigkeit beträgt 12,5 MPa.

Beispiel 16: Beispiel 15 wird unter Verwendung des Beschleunigers VI (3,3 Teile) wiederholt. Die durchschnittliche Ueberlappungsscherfestigkeit beträgt 11,6 MPa.

Beispiel 17: Beispiel 10 wird wiederholt, indem Dicyandiamid als Härter durch Adipinsäuredihydrazid (23,1 Teile) und der Beschleuniger durch Beschleuniger IV (7,6 Teile) ersetzt wird. Die durchschnittliche Ueberlappungsscherfestigkeit beträgt 13,2 MPa.

Beispiel 18: Beispiel 17 wird unter Verwendung des Beschleunigers I (2,6 Teile) und Härtung bei 200°C während 5 Minuten wiederholt. Die durchschnittliche Ueberlappungsscherfestigkeit beträgt 14,5 MPa.

Beispiel 19: Beispiel 5 wird unter Verwendung des Beschleunigers IX (6,4 Teile) wiederholt. Die Verfestigung erfolgt bei 180°C in 1,6 Minuten, während das Gemisch bei 40°C 7 Tage stabil ist. Beim Erhitzen einer 2 mm dicken Schicht des zusätzlich noch 60 Teile Talk enthaltenden Gemisches Bei 200°C während 5 Minuten erfolgt keine Blasenbildung.

Beispiel 20: Beispiel 1 wird unter Verwendung des Beschleunigers X (10,6 Teile) wiederholt. Eine Verfestigung erfolgt bei 180°C in 1,8 Minuten, während das Gemisch bei 40°C 8 Tage stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 21: Beispiel 1 wird unter Verwendung des Beschleunigers XI (4,5 Teile) wiederholt. Die Verfestigung erfolgt bei 180°C in 1,7 Minuten, während das Gemisch bei 40°C 25 Tage stabil ist. Beim Erhitzen einer 2 mm dicken Schicht des zusätzlich noch 60 Teile Talk enthaltenden Gemisches auf 200°C während 5 Minuten, erfolgt keine Blasenbildung.

Beispiel 22: Beispiel 1 wird unter Verwendung des Beschleunigers XII (4,8 Teile) wiederholt. Die Verfestigung erfolgt bei 180°C in einer Minute, während das Gemisch bei 40°C 7 Tage stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 23: Beispiel 5 wird unter Verwendung des Beschleunigers XIII (2,3 Teile) wiederholt. Die Verfestigung bei 180°C erfolgt in 1,7 Minuten, wobei das Gemisch bei 40°C während 14 Tagen stabil ist. Beim Erhitzen einer 2 mm dicken Schicht des zusätzlich noch 60 Teile Talk enthaltenden Gemisches bei 200°C während 5 Minuten gibt es keine Blasenbildung.

Beispiel 24: Beispiel 14 wird unter Verwendung des Beschleunigers IX (6,4 Teile) wiederholt. Die durchschnittliche Ueberlappungsscherfestigkeit beträgt 11,3 MPa.

Beispiel 25: Beispiel 10 wird unter Verwendung des Beschleunigers X (10,6 Teile) wiederholt. Die durchschnittliche Ueberlappungsscherfestigkeit beträgt 16,9 MPa.

Beispiel 26: Beispiel 12 wird unter Verwendung des Beschleunigers XI (4,5 Teile) wiederholt. Die durchschnittliche Ueberlappungsscherfestigkeit beträgt 16,2 MPa.

Beispiel 27: Beispiel 12 wird unter Verwendung des Beschleunigers XII (4,8 Teile) wiederholt. Die durchschnittliche Ueberlappungsscherfestigkeit beträgt 16,9 MPa.

Beispiel 28: Beispiel 14 wird unter Verwendung des Beschleunigers XIII (2,3 Teile) wiederholt. Die durchschnittliche Ueberlappungsscherfestigkeit beträgt 11,7 MPa.

Beispiel 29: Beispiel 1 wird unter Verwendung des Beschleunigers XIV (4,6 Teile) wiederholt. Die Verfestigung erfolgt bei 180°C innerhalb von 0,8 Minuten, während das Gemisch bei 40°C 8 Tage stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 30: Beispiel 10 wird unter Verwendung des Beschleunigers XIV (4,6 Teile) wiederholt. Die durchschnittliche Ueberlappungsscherfestigkeit beträgt 15,1 MPa.

Beispiel 31: Das im Beispiel 1 beschriebene Epoxidharz (100 Teile) wird mit 4,4'-Diaminodiphenylsulfon (32 Teile), feinverteiltem Silikagel (5 Teile) und Beschleuniger XV (4 Teile) vermischt. Eine Probe des Gemisches wird auf einer Heizplatte innerhalb von 3 Minuten fest, wobei das Gemisch bei 40°C während mehr als 4 Tagen stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 32: Beispiel 10 wird unter Ersatz des Dicyandiamids durch 4,4'-Diaminodiphenylsulfon (32 Teile), des Beschleunigers durch Beschleuniger XV (4 Teile) und Härtung bei 220°C während 10 Minuten wiederholt. Die durchschnittliche Ueberlappungsscherfestigkeit beträgt 7,6 MPa.

Beispiel 33: Beispiel 19 wird wiederholt, indem die Menge des Beschleunigers IX auf 3,2 Teile herabgesetzt wird. Die Verfestigung erfolgt bei 180°C in 2,7 Minuten, während das Gemisch bei 40°C 20 Tage stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 34: Beispiel 22 wird wiederholt, indem die Menge des Beschleunigers XII auf 2,4 Teile reduziert wird. Die Verfestigung bei 180°C erfolgt in 2,1 Minuten, wobei das Gemisch bei 40°C während 61 Tagen stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 35: Beispiel 20 wird wiederholt, indem die Menge des Beschleunigers X auf 5,3 Teile reduziert wird. Die Verfestigung bei 180°C findet in 2,6 Minuten statt, während das Gemisch bei 40°C 46 Tage stabil ist. Beim Erhitzen einer 2 mm dicken Schicht des zusätzlich noch 60 Teile Talk enthaltenden Gemisches bei 200°C während 5 Minuten, erfolgt keine Blasenbildung.

Beispiel 36: Beispiel 21 wird wiederholt, indem die Menge des Beschleunigers XI auf 2,2 Teile reduziert wird. Die Verfestigung erfolgt bei 180° in 2,5 Minuten während das Gemisch bei 40°C 73 Tage stabil ist. Beim Erhitzen einer 2 mm dicken Schicht des zusätzlich noch 60 Teile Talk enthaltenden Gemisches bei 200°C während 5 Minuten erfolgt keine Blasenbildung.

Beispiel 37: Beispiel 24 wird wiederholt, indem die Menge des Beschleunigers IX auf 3,2 Teile reduziert wird. Die durchschnittliche Ueberlappungsscherfestigkeit beträgt 12,5 MPa.

Beispiel 38: Beispiel 25 wird wiederholt, indem die Menge des Beschleunigers X auf 5,3 Teile reduziert wird. Die durchschnittliche Ueberlappungsscherfestigkeit beträgt 17,5 MPa.

Beispiel 39: Beispiel 26 wird wiederholt, indem die Menge des Beschleunigers XI auf 2,2 Teile reduziert wird. Die durchschnittliche Ueberlappungsscherfestigkeit beträgt 16,2 MPa.

Beispiel 40: Beispiel 27 wird wiederholt, indem die Menge des Beschleunigers XII auf 2,4 Teile reduziert wird. Die duruchschnittliche Ueberlappungsscherfestigkeit beträgt 16,9 MPa.

**Patentansprüche**

1. Härtbares Stoffgemisch enthaltend
   (a) ein Epoxidharz
   (b) einem stickstoffhaltigen latenten Härter für das Epoxidharz und
   (c) als Härtungsbeschleuniger, als Pulver im Gemisch von (a) und (b) verteilt, ein Reaktionsprodukt einer Stickstoffbase und eines halogensubstituierten monomeren Phenols.

2. Stoffgemisch nach Anspruch 1, worin das Harz (a) ein flüssiger Polyglycidylether, Polyglycidylester, N,N'-Diglycidylhydantoin oder ein flüssiges Poly(N-glycidyl)derivat eines aromatischen Amins ist.

3. Stoffgemisch nach Anspruch 1 oder 2, worin der Härter (b) ein Bortrichlorid/Amin- oder Bortrifluorid/Aminkomplex, Dicyandiamid, ein Aminotriazin ein Aminotriazol, ein Carbonsäurehydrazid, Semicarbazid, Cyanoacetamid oder ein aromatisches Polyamin ist.

4. Stoffgemisch nach einem der vorhergehenden Ansprüche, worin das halogensubstituierte Phenol ein einkerniges oder zweikerniges Phenol ist.

5. Stoffgemisch nach einem der vorhergehenden Ansprüche, worin das Phenol mindestens 3 Halogenatom enthält.

6. Stoffgemisch nach Anspruch 5, worin das Phenol ein einkerniges oder ein zweikerniges Phenol ist, welches 3 bis 8 an aromatische Kohlenstoffatome gebundene Fluor-, Chlor-, Brom- oder Iodatome aufweist.

7. Stoffgemisch nach Anspruch 6, worin das Phenol 3 bis 5 an aromatische Kohlenstoffatome gebundene Fluor-, Chlor-, Brom- oder Iodatome aufweist.

8. Stoffgemisch nach Anspruch 7, worin das Phenol ein einkerniges Phenol mit 3 bis 5 Fluor, Chlor-, Brom- oder Iodatomen oder ein Bisphenol mit 4 an aromatische Kohlenstoffatome gebunden Chlor- oder Bromatomen ist.

9. Stoffgemische nach einem der vorhergehenden Ansprüche, worin die zur Herstellung von (c) verwendete Stickstoffbase ein Amin oder ein basischer Stickstoffenthaltender Heterocyclus ist.

10. Stoffgemisch nach Anspruch 9, worin die Stickstoffbase ein mindestens eine tertiäre Aminogruppe enthaltendes Amin oder ein Imidazol ist.

11. Stoffgemisch nach Anspruch 10, worin das Amin ein Monoamin oder ein Polyamin mit 1 bis 3 tertiären Aminogruppen ist.

12. Verfahren zum Verkleben oder Abdichten von zwei Oberflächen, indem ein Stoffgemisch nach einem der vorhergehenden Ansprüche auf eine oder beide Oberflächen aufgetragen wird, die zwei Oberflächen zusammengelegt werden, wobei das Stoffgemisch dazwischen liegt, um eine zusammengefügte Einheit zu erhalten, und diese dann bis zur Aushärtung des Gemisches erhitzt wird.

13. Verfahren nach Anspruch 12, worin die Einheit bei 150 bis 220°C erhitzt wird.

14. Verfahren nach Anspruch 12 oder 13, worin die Oberflächen aus Metall sind.

Europäisches Patentamt

# EUROPÄISCHER RECHERCHENBERICHT

Nummer der Anmeldung

EP 87 81 0160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 117 825 (PROTEX)<br>* Seite 2, Zeile 35 - Seite 4, Zeile 29; Ansprüche 1-7,9-11 * & US-A-4 499 246 (Kat. D)<br>--- | 1,2,4-11 | C 08 G 59/56<br>C 08 G 59/68 |
| A | FR-A-1 514 893 (PHILIPS)<br>* Seite 2, linke Spalte, Abschnitte 5,6; Anspruch 1 *<br>--- | 1,2 | |
| A | GB-A- 959 028 (CIBA)<br>* Seite 1, Zeile 26 - Seite 2, Zeile 28; Ansprüche 1-4 *<br>--- | 1-4 | |
| A | FR-A-1 581 068 (REICHHOLD-BECKACITE)<br>* Seite 1, Zeile 40 - Seite 3, Zeile 4; Anspruch 1 *<br>--- | 1,2 | RECHERCHIERTE SACHGEBIETE (Int. Cl.4) |
| D,A | US-A-3 520 905 (3M)<br>* Spalte 1, Zeile 55 - Spalte 3, Zeile 7 *<br>----- | 1,2 | C 08 G |

Der vorliegende Recherchenbericht wurde für alle Patentansprüche erstellt.

| Recherchenort | Abschlußdatum der Recherche | Prüfer |
|---|---|---|
| DEN HAAG | 03-07-1987 | BOURGONJE A.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument